# EUROPEAN PATENT APPLICATION

(11) **EP 4 417 498 A1**
(43) Date of publication of application: **21.08.2024**
(21) Application number: 24156465.7
(22) Date of filing: 08.02.2024
(51) Int. Cl.: B62J 25/06, B62K 19/30, B62K 11/04

(54) **ADJUSTABLE FOOTREST ASSEMBLY AND A METHOD FOR OPERATING THE SAME**

(30) Priority: 16.02.2023 IN 202341010532
(71) Applicant: TVS Motor Company Limited, 600006 Chennai (IN)
(72) Inventor: Kendhapadi, Mothilal Balakrishnan, 600006 Chennai (IN); Goutham, Selma Rajan, 600006 Chennai (IN); Velagapudi, Sai Praveen, 600006 Chennai (IN); Kasiviswanathan, Dineshkumar, 600006 Chennai (IN)
(74) Representative: Patentanwaltskanzlei Matschnig & Forsthuber OG

(57) **Abstract**

The present invention relates to at least one adjustable footrest assembly (100) of a vehicle (10). The at least one adjustable footrest assembly (100) comprises a right footrest sub-assembly (102) comprising a right footrest (102a), a left footrest sub-assembly (104) comprising a left footrest (104a) and a footrest adjusting mechanism operably connected to the right footrest sub-assembly (102) and the left footrest sub-assembly (104). The footrest adjusting mechanism is configured to move the right footrest (102a) and the left footrest (104a) in an upward direction (UP) of the vehicle (10) on receipt of a first input and the footrest adjusting mechanism being configured to move the right footrest (102a) and the left footrest (104a) in a downward direction (DW) of the vehicle (10) on receipt of a second input. The present invention provides optimum riding posture for the given rider/pillion rider and riding condition.

## Description

### FIELD OF THE INVENTION

The present invention relates to a footrest assembly. More particularly, the present invention relates to an adjustable footrest assembly and a method for operating the same.

### BACKGROUND OF THE INVENTION

Saddle type vehicles, more specifically two-wheelers, are sold in multiple countries across the world. The customer base of the saddle type vehicles contains people with diverse anthropological dimensions. It is very difficult to design a vehicle which satisfies comfort needs of all the people. For example, the rider and/or pillion rider cannot adjust left footrest and the right footrest provided on the vehicle to suit his or her height. Further, based on factors such as speed, terrain, traffic etc., the rider and/or the pillion rider of the vehicle might like to change his or her posture while riding the vehicle. Also, fixed position of the left footrest and the right footrest causes rider and/or pillion rider fatigue during long durations of riding. However, changing of posture is difficult as the left footrest and right footrest provided on the vehicle are non-adjustable.

In view thereof, there is a need felt to overcome at least the above-mentioned disadvantages of the prior art and provide a footrest assembly with adjustable footrests.

### SUMMARY OF THE INVENTION

In one aspect of the present invention, an adjustable footrest assembly of a vehicle is disclosed. The adjustable footrest assembly of the vehicle comprises a right footrest sub-assembly, a left footrest sub-assembly and a footrest adjusting mechanism. The footrest adjusting mechanism is operably connected to the right footrest sub-assembly and the left footrest sub-assembly. The right footrest sub-assembly comprises a right footrest. The left footrest sub-assembly comprises a left footrest. The left footrest is adapted to receive the left foot of a rider of the vehicle. The right footrest is adapted to receive the right foot of the rider of the vehicle. The adjustable footrest assembly can be used for both the rider as well as a pillion rider of the vehicle. The footrest adjusting mechanism is configured to move the right footrest and the left footrest in an upward direction of the vehicle on receipt of a first input. The footrest adjusting mechanism is configured to move the right footrest and the left footrest in a downward direction of the vehicle on receipt of a second input.

In an embodiment, the footrest adjusting mechanism comprises at least one connector shaft, at least one linear actuator and at least one rocker arm. The connector shaft is assembled on the frame of the vehicle. In one non-limiting example, the vehicle has a head tube and a main frame extending rearwardly from the head tube. The main frame comprises a left main frame and a right main frame, parallel to each other and extending from the head tube. The connector shaft extends between a left end portion and a right end portion. The connector shaft is assembled on the left main frame and the right main frame such that the left end portion of the connector shaft protrudes outwardly from the left main frame and the right end portion of the connector shaft protrudes outwardly from the right main frame. In order to assemble the connector shaft, the left main frame is provided with a left guide and the right main frame is provided with a right guide. The left guide and the right guide are adapted to receive the connector shaft and facilitate free rotation of the connector shaft. The right footrest sub-assembly is assembled on the right end portion of the connector shaft and the left footrest sub-assembly is assembled on the left end portion of the connector shaft such that rotation of the connector shaft causes movement of right footrest and the left footrest in the upward and the downward direction of the vehicle. The rocker arm is operably connected to both the connector shaft and the linear actuator. The rocker arm is operably connected to a portion of the connector shaft between the left main frame and right main frame. The linear actuator is mounted on rear sub-frames. The rear sub-frames extend rearwardly from the main frame and support various components of the vehicle such as the seat, tail lamp units, etc. The rear subframes generally comprises one or more mounting brackets for mounting the linear actuator. The linear actuator is configured to retract in a linear actuator housing on receiving the first input and extend in the linear actuator housing on receiving the second input. The retraction of the linear actuator results in movement of the connector shaft in an anti-clockwise direction, which in turn results in movement of the right footrest and the left footrest in the upward direction of the vehicle. Similarly, the extension of the linear actuator results in movement of the connector shaft in a clockwise direction, which in turn results in the movement of the right footrest and the left footrest in the downward direction of the vehicle.

In an embodiment, the connector shaft rotates in a pre-defined range. The pre-defined range is generally dependent on factors such as a stroke length of the linear actuator i.e., extent of retraction and extension of the linear actuator, a length of the rocker arm, a distance between the connector shaft and the left footrest, a distance between the connector shaft and the right footrest, an angle between the rocker arm and the linear actuator and an angle between the linear actuator and the rear sub-frames on which the linear actuator is mounted. In one non-limiting example, the pre-defined range of rotation of the crankshaft is zero degree to twenty-five degrees in the anticlockwise direction and twenty-five degrees to zero degree in the clockwise direction when seen from the right hand side of the adjustable footrest assembly.

In an embodiment, the extent of retraction, extent of extension and the direction of movement of the linear actuator is controlled by a toggle switch. The toggle switch is generally provided on the vehicle where it can be easily accessible by the rider or the pillion rider of the vehicle in running as well as non-running states of the vehicle. In one non-limiting example, the switch is provided on a handlebar assembly of the vehicle. The toggle switch can also be provided near rear portion of the vehicle such as rear frames of the vehicle or a pillion seat portion where the toggle switch can be easily accessible by the pillion rider of the vehicle.

In an embodiment, the toggle switch may be a DPDT (Double Pole Double Throw) switch with two input terminals, a first set of output terminals and a second set of output terminals. The input terminals of the toggle switch are connected to at least one battery of the vehicle. The first set of the output terminals and the second set of the output terminals of the toggle switch are connected to the linear actuator. The first input on the toggle switch results in the connection of input terminals with the first set of output terminals resulting in retraction of the linear actuator. Similarly, the second input on the toggle switch results in the connection of input terminals with the second set of output terminals resulting in extension of the linear actuator.

In an embodiment, the right footrest sub-assembly comprises a brake mechanism operable by the rider of the vehicle and the left footrest assembly comprises a gear changing mechanism operable by the rider of the vehicle.

In another aspect of the present invention, a method for operating at least one adjustable footrest assembly is disclosed. The adjustable footrest assembly comprises a right footrest sub-assembly, a left footrest sub-assembly and a footrest adjusting mechanism operably connected to the right footrest sub-assembly and the left footrest sub-assembly. The method comprises receiving a first input by the footrest adjusting mechanism. The method further comprises moving a right footrest of the right footrest sub-assembly and a left footrest of the left footrest sub-assembly in an upward direction of the vehicle. The step of moving is performed by the footrest adjusting mechanism. The method further comprises receiving a second input by the footrest adjusting mechanism. The method further comprises moving the right footrest of the right footrest sub-assembly and the left footrest of the left footrest sub-assembly in a downward direction of the vehicle.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a schematic view of a two-wheeled vehicle, in accordance with an embodiment of the present invention.
Figure 2 illustrates a rear-side perspective view of the adjustable footrest assembly, in accordance with the embodiment of the present invention.
Figure 3 illustrates a right-side perspective view of the adjustable footrest assembly, in accordance with the embodiment of the present invention.
Figure 4 illustrates a left-side schematic view of the adjustable footrest assembly, in accordance with the embodiment of the present invention.
Figure 5 illustrates connection of a toggle switch with the linear actuator of the adjustable footrest assembly, in accordance with the embodiment of the present invention.
Figure 6 illustrates a linear actuator being assembled onto a rocker arm, in accordance with the embodiment of the present invention.
Figure 7 illustrates movement of left footrest in upward direction of the vehicle, in accordance with the embodiment of the present invention.
Figure 8 is a flow chart illustrating a method for operating an adjustable footrest assembly, in accordance with an embodiment of the present invention.

### DETAILED DESCRIPTION OF THE INVENTION

Various features and embodiments of the present invention here will be discernible from the following further description thereof, set out hereunder.

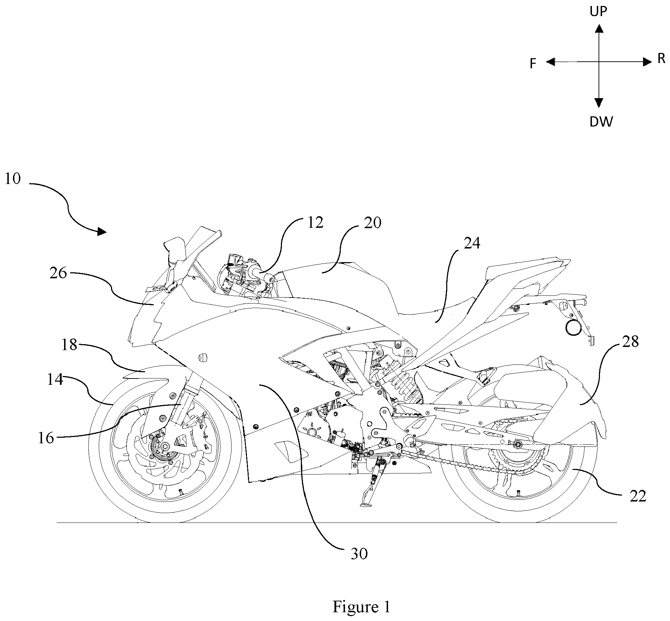

Figure 1 illustrates a schematic view of a vehicle 10, in accordance with an embodiment of the present invention.

The vehicle 10 is a saddle type vehicle, preferably a two wheeler, and includes a frame structure (not shown) to support different parts of the vehicle 10. A head tube (not shown) is provided at a front end of said frame structure. The head tube supports a steering shaft (not shown) rotatable in a certain range. In an upper portion of the head tube, a handlebar assembly 12 is rotatably connected to the steering shaft. The handlebar assembly 12 is used to steer the vehicle 10 and is connected to a front wheel 14 through a front fork assembly 16. The front fork assembly 16 in turn is connected to the handlebar assembly 12 by means of a pair of upper and lower brackets (not shown). The front fork assembly 16 is further supported partially on a front fender 18 and is connected to the front wheel 14. An upper portion of the front wheel 14 is covered by the front fender 18 which prevents mud and water from getting deflected towards an upper portion of the front fork assembly 16.

In a front portion of the frame structure, a fuel tank 20 and a power generating unit (not shown) may be arranged. The power generating unit is equipped with an exhaust system that includes an exhaust pipe (not shown) connected to the power generating unit and a muffler (not shown) connected to the exhaust pipe. The muffler (not shown) extends rearwards along a rear wheel 22. A seat 24 is placed behind the fuel tank 20. The seat 24 may include a front rider portion and rear pillion portion. In an embodiment, the front rider portion and the rear pillion portion are provided as separate seat portions. In an embodiment, the front rider portion and the rear pillion portion may be provided as a single seat portion.

For safety of the rider and in conformance with the traffic rules, a headlamp unit and a turn signal lamp unit (not shown) are provided in a front portion of the vehicle 10. The headlamp unit and the turn signal lamp unit are housed in a headlamp housing assembly 26. The safety of said the vehicle 10 is also improved by providing a braking mechanism (not shown). Further, suspension systems are provided for comfortable steering of the vehicle 10 on road. The front fork assembly 16, which forms the front suspension system, serves as rigidity component just like the frame structure. The front fork assembly 16 clamped to the head tube through the upper bracket (not shown) and the lower bracket (not shown) is capable of being moved in the left and right direction of the vehicle 10. Further, a rear suspension system is connected to the frame structure at a rear portion thereof. Particularly, at the rear portion of the frame structure, the rear wheel 22 is suspended by the rear suspension system.

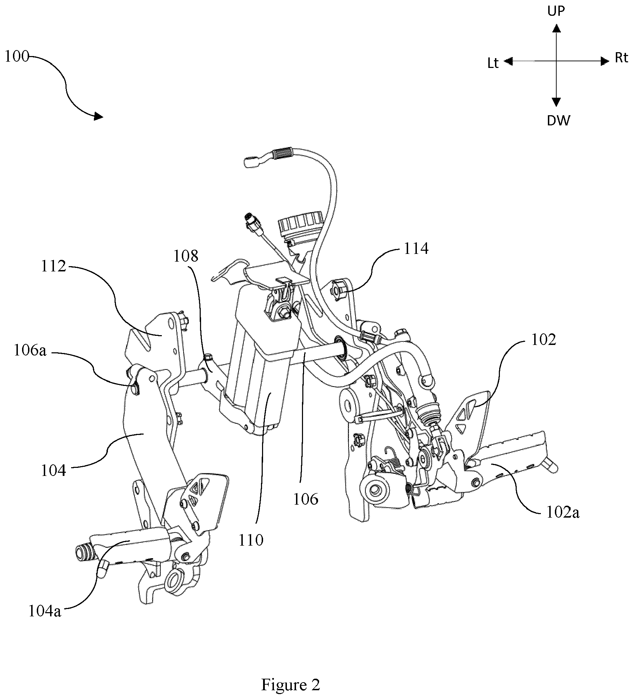

Power from the power generating unit is transmitted to the rear wheel 22 through a transmission assembly (not shown), so as to drive and rotate the rear wheel 22. A rear fender 28 for covering an upper side of the rear wheel 22 is mounted to the rear portion of the frame structure to prevent mud and water splashed by the rotating rear wheel 22. To enhance the overall aesthetics of the vehicle 10 and to prevent undesired foreign particles from entering parts of the vehicle 10, a plurality of side covers 30 are also attached to the frame structure. The vehicle 10 also comprises an adjustable footrest assembly 100 as discussed in detail in Figures 2-8.

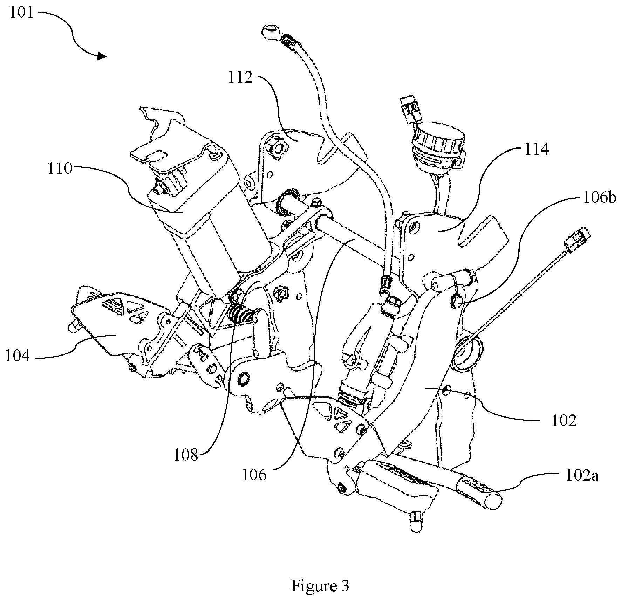

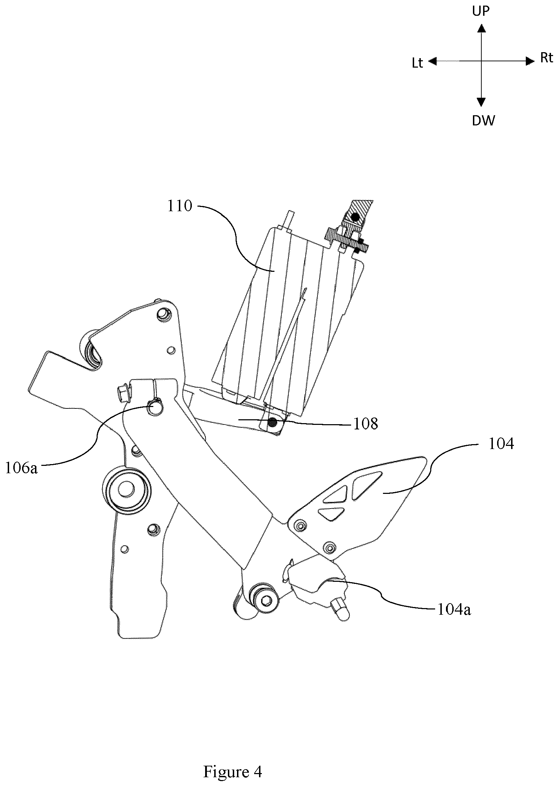

Figure 2 illustrates a rear-side perspective view of the adjustable footrest assembly 100, in accordance with the embodiment of the present invention. Figure 3 illustrates a right-side perspective view of the adjustable footrest assembly 100, in accordance with the embodiment of the present invention. Figure 4 illustrates a left-side schematic view of the adjustable footrest assembly 100, in accordance with the embodiment of the present invention.

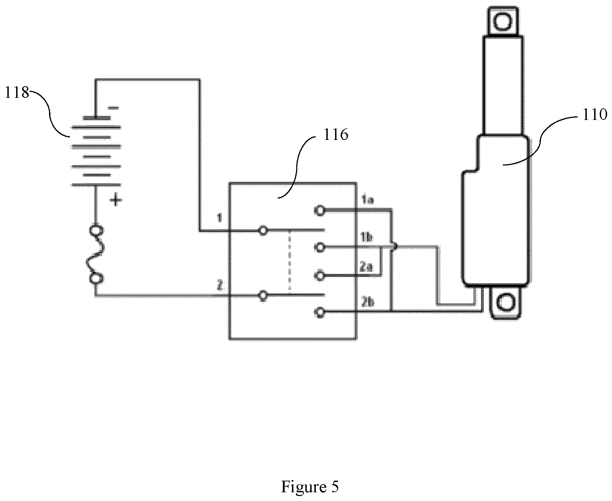

As shown, the adjustable footrest assembly comprises a right footrest sub-assembly 102, a left footrest sub-assembly 104 and a footrest adjusting mechanism. The right footrest sub-assembly 102 comprises a right footrest 102a and the left footrest subassembly 104 comprises a left footrest 104a. The right footrest 102a is adapted to receive a right foot of a rider of the vehicle 10 and the left footrest 104a is adapted to receive a left foot of the rider of the vehicle 10. It is to be understood that adjustable footrest assembly 100 can also be provided for a pillion rider of the vehicle 10. In other words, in an embodiment, the vehicle 10 can comprise separate adjustable footrest assemblies for both the rider of the vehicle 10 as well as the pillion rider of the vehicle 10. The footrest adjusting mechanism is configured to move the right footrest 102a of the right footrest assembly 102 and the left footrest 104a of the left footrest assembly 104 in an upward direction (UP) of the vehicle 10 on receiving a first input from the rider or the pillion rider of the vehicle 10. The footrest adjusting mechanism is also configured to move the right footrest 102a of the right footrest assembly 102 and the left footrest 104a of the left footrest assembly 104 in a downward direction (DW) of the vehicle 10 on receiving a second input from the rider or the pillion rider of the vehicle 10. The first input and the second input are provided on operation of a switch such as a toggle switch 116 (shown in Figure 5) by the rider of a vehicle 10. In case the adjustable footrest assembly 100 is for the pillion rider of the vehicle 10, such toggle switch 116 will be provided for the pillion rider of the vehicle 10. It is to be understood that the toggle switch 116 for providing the first input and the second input should be accessible to the rider or the pillion rider of the vehicle 10 in both running and non-running states of the vehicle 10. In one non-limiting example, for the rider of the vehicle 10, such toggle switch 116 may be provided on a handlebar assembly 12 of the vehicle 10 or at any location which is easily accessible to the rider of the vehicle 10. In another non-limiting example, for a pillion rider of the vehicle 10, such toggle switch 116 may be provided near rear portion of the vehicle 10 such as rear pillion portion of the seat 24 of the vehicle 10 or at any location of the vehicle 10 which is easily accessible by the pillion rider of the vehicle 10.

In an embodiment, the footrest adjusting mechanism comprises at least one connector shaft 106, at least one rocker arm 108 and at least one linear actuator 110. In one non-limiting example, the frame structure of the vehicle 10 comprises a left main frame (not shown) and a right main frame (not shown). The left main frame and the right main frame are generally parallel to each other and extend rearwardly from the head tube of the vehicle 10. The connector shaft 106 is assembled on the right main frame and the left main frame of the vehicle 10. The connector shaft 106 extends between a left end portion 106a and a right end portion 106b. The connector shaft 106 is assembled on the left main frame and the right main frame of the vehicle 10 such that the left end portion 106a extends outwardly from the left main frame and the right end portion 106b extends outwardly from the right main frame. In order to assemble the connector shaft 106 onto the left main frame and the right main frame, a left guide 112 is provided on the left main frame and a right guide 114 is provided on the right main frame. The connector shaft 106 is assembled on the left main frame and the right main frame with the help of the left guide 112 and the right guide 114. The left guide 112 and the right guide 114 are adapted to facilitate free rotation of the connector shaft 106. The construction of the rocker arm 108 is known in the art and has not been discussed in detail. The left footrest sub-assembly 104 is assembled on the left end portion 106a of the connector shaft 106 such that the rotation of the connector shaft 106 results in the movement of the left footrest 104a. Similarly, the right footrest sub-assembly 102 is assembled on the right end portion 106b of the connector shaft 106 such that rotation of the connector shaft 106 results in the movement of the right footrest 102a. The rocker arm 108 is operably connected to the connector shaft 106 and the linear actuator 110. The rocker arm 108 is operably connected to a portion of the connector shaft 106 between the left main frame and the right main frame. The movement of the linear actuator 110 is transferred to the connector shaft 106 by means of the rocker arm 108. The linear actuator 110 is operably connected to the rocker arm 108. The linear actuator 110 is operably connected to the toggle switch 116, which in turn is connected to at least one battery 118 (not shown) of the vehicle 10. The toggle switch 116 is operable by the rider or the pillion rider of the vehicle 10 to provide the first input and the second input to the linear actuator 110 of the adjustable footrest assembly 100. On receiving the first input, the linear actuator 110 is configured to retract in a linear actuator housing of the linear actuator 110. Such retraction of the linear actuator 110 rotates the connector shaft 106 in an anti-clockwise direction when seen from the right hand side of the adjustable footrest assembly 100. The movement of the connector shaft 106 in the anti-clockwise direction results in the movement of left footrest 104a and the right footrest 102a in the upward direction (UP) of the vehicle 10. Similarly, on receiving the second input, the linear actuator 110 is configured to extend from the linear actuator housing of the linear actuator 110. Such movement rotates the connector shaft 106 in a clockwise direction when seen from the right hand side of the adjustable footrest assembly 100. The movement of the connector shaft 106 in the clockwise direction results in the movement of left footrest 104a and the right footrest 106a in the downward direction (DW) of the vehicle 10.

As stated, the connector shaft 106 rotates in the anti-clockwise direction when seen from the right hand side of the adjustable footrest assembly 100 and the clockwise direction when seen from the right hand side of the adjustable footrest assembly 100. The connector shaft 106 rotates in a pre-defined range θ which is decided by the manufacturer of the vehicle 10. In one non-limiting example, the pre-defined range θ of rotation is zero degree to twenty five degrees in the anti-clockwise direction and the twenty five degrees to zero degree in the clockwise direction when seen from the right hand side of the adjustable footrest assembly 100. However, this pre-defined range θ of rotation should not be construed as limiting and the manufacturer of the vehicle 10 can decide onto different ranges of rotation based on variation in the anthropological dimensions of the customer base for the vehicle 10. The pre-defined range θ of rotation is dependent on various factors such as, not being limited to, type of the vehicle 10, a stroke length of the linear actuator 110, a length of the rocker arm 108, a distance between the connector shaft 106 and the right footrest 102a, a distance between the connector shaft 106 and the left footrest 104a, an angle between the rocker arm 108 and the linear actuator 110 and an angle between the linear actuator 110 and the rear sub-frames on which the linear actuator 110 is mounted.

It is to be understood that longitudinal forces and vertical forces acting on the left footrest 104a and the right footrest 102a are directly supported by the linear actuator 110 and the rear sub-frames on which the linear actuator 110 is mounted. The mechanism inside linear actuator 110 such as, not being limited to, leadscrew, nut, worm gears, locks hold the left footrest 104a and the right footrest 102a in a set position when not actuated.

Figure 5 illustrates connection of a toggle switch 116 with the linear actuator 110 of the adjustable footrest assembly 100, in accordance with the embodiment of the present invention.

As already stated, the toggle switch 116 is operably connected to the linear actuator 110 of the footrest adjusting mechanism. The toggle switch 116 is also connected to the at least one battery 118 of the vehicle 10. Figure 5 indicates a DPDT (Double Pole Double Throw) switch with two input terminals i.e., a first input terminal 1 and a second input terminal 2. The first input terminal 1 is connected to a negative terminal of the at least one battery 118 and the second input terminal 2 is connected to a positive terminal of the at least one battery 118. The DPDT switch also comprise a first set of output terminals and a second set of output terminals. The first set of output terminals comprises a first output terminal 1a connected to a first terminal of the linear actuator 110 and a second output terminal 1b connected to a second terminal of the linear actuator 110. The second set of output terminals comprises a third output terminal 2a connected to the first terminal of the linear actuator 110 and a fourth output terminal 2b connected to the second terminal of the linear actuator 110. On receiving the first input on the toggle switch 116 by the rider or the pillion rider of the vehicle 10, the first input terminal 1 is connected to the first output terminal 1a and the second input terminal 2 is connected to the third output terminal 2a resulting in retraction of the linear actuator 110. On receiving the second input on the toggle switch 116 by the rider or the pillion rider of the vehicle 10, the first input terminal 1 is connected to the second output terminal 1b and the second input terminal 2 is connected to the fourth output terminal 2b resulting in extension of the linear actuator 110.

The toggle switch 116 also controls the extent of retraction and extension of the linear actuator 110. The extent of retraction and extension of the linear actuator 110 is dependent on time period of operation of the toggle switch 116 by a rider or pillion rider of the vehicle 10. In other words, between an initial position and a final position of the linear actuator 110, the linear actuator 110 can be stopped at one or more intermediate positions based on the time period of operation of the toggle switch 116 by a rider or pillion rider of the vehicle 10. In other words, the rider and/or pillion rider operates the toggle switch 116 to control the extension and retraction of linear actuator to set the desired footrest position. The toggle switch can be operated in the running states of the vehicle 10 as well as on the non-running states of the vehicle 10.

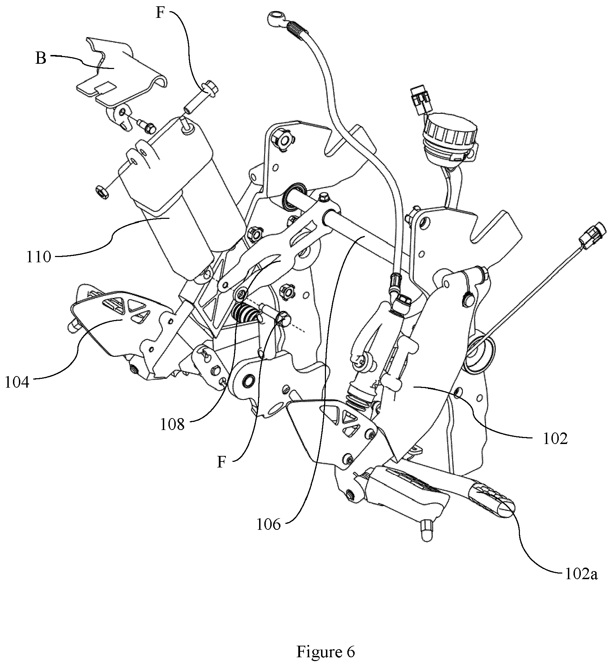

Figure 6 illustrates assembly of a linear actuator 110 onto a rocker arm 108, in accordance with the embodiment of the present invention.

As shown, the linear actuator 110 is detachably assembled onto the rocker arm 108 using one or more fasteners (F) such as screws, nuts, bolts, etc. Also, the linear actuator 110 is detachably assembled onto the rear frames of the vehicle 10 by means of one or more brackets (B) and one or more fasteners (F).

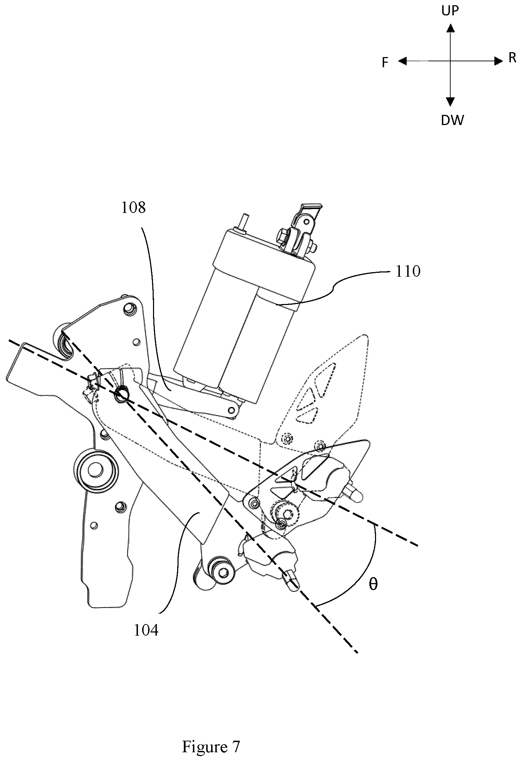

Figure 7 illustrates movement of left footrest 104a in the upward direction (UP) of the vehicle 10, in accordance with the embodiment of the present invention.

As already stated, on receiving the first input, the linear actuator 110 retracts. Such movement rotates the connector shaft 106 in an anti-clockwise direction when seen from the right hand side of the adjustable footrest assembly 100. The movement of the connector shaft 106 in the anti-clockwise direction when seen from the right hand side of the adjustable footrest assembly 100 results in the movement of left footrest 104a and the right footrest 102a in the upward direction (UP) of the vehicle 10. Also, the extent of rotation of the connector shaft 106 will determine movement of the right footrest 102a and the left footrest 104a in the upward direction (UP) of the vehicle 10. In one non-limiting example, the pre-defined range θ of rotation is zero degree to twenty-five degrees in the anti-clockwise direction when seen from the right hand side of the adjustable footrest assembly 100 and the twenty-five degrees to zero degree in the clockwise direction when seen from the right hand side of the adjustable footrest assembly 100.

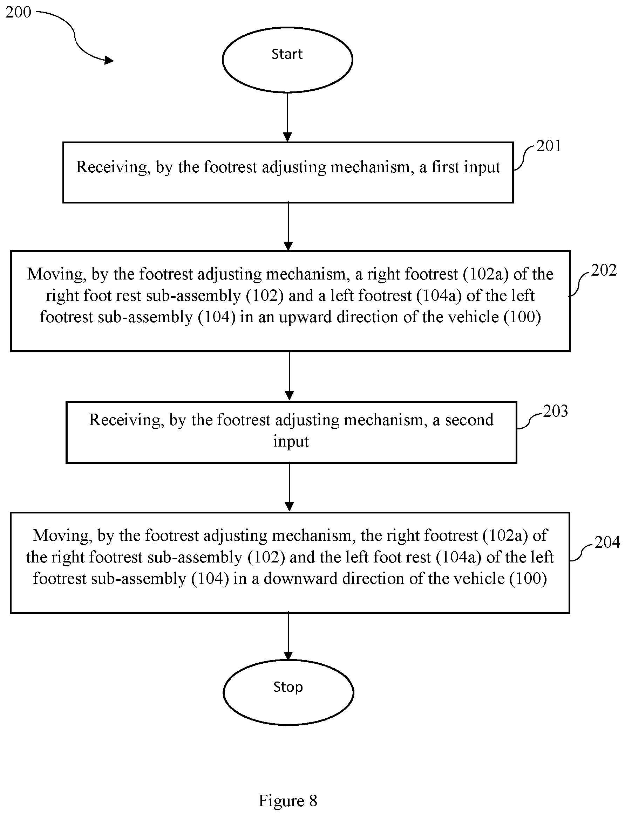

Figure 8 is a flow chart illustrating a method 200 for operating at least one adjustable footrest assembly 100, in accordance with an embodiment of the present invention.

The adjustable footrest assembly 100 of the vehicle 10 comprises a right footrest sub-assembly 102, a left footrest sub-assembly 104 and a footrest adjusting mechanism operably connected to the right footrest sub-assembly 102 and the left footrest sub-assembly 104. At step 201, the method 200 comprises a step of receiving a first input by the footrest adjusting mechanism. At step 202, the method 200 comprises a step of moving a right footrest 102a of the right footrest sub-assembly 102 and a left footrest 104a of the left footrest sub-assembly 104 in an upward direction (UP) of the vehicle 10. The step 202 is performed by the footrest adjusting mechanism. At step 203, the method 200 comprises receiving a second input by the footrest adjusting mechanism. At step 204, the method 200 comprises moving the right footrest 102a of the right footrest sub-assembly 102 and the left footrest 104a of the left footrest sub-assembly 104 in a downward direction (DW) of the vehicle 10.

In an embodiment, the footrest adjusting mechanism comprises at least one connector shaft 106, at least one linear actuator 110 and at least one rocker arm 108. The connector shaft 106 is assembled on a left main frame and a right main frame of the vehicle 10. The rocker arm 108 is operably connected to both the connector shaft 106 and the linear actuator 110. The rocker arm 108 is operably connected to a portion of the connector shaft 106 between the left main frame and right main frame. The linear actuator 110 is mounted on rear sub-frames (not shown). The rear sub-frames extend rearwardly from the main frame and support various components of the vehicle 10 such as the seat 24, tail lamp units, etc. The rear subframes generally comprises one or more mounting brackets (B) for mounting the linear actuator 110. The first input and the second input are received by the linear actuator 110 of the vehicle 10. On receiving the first input, the linear actuator 110 retracts in a linear actuator housing of the linear actuator 110. The retraction of the linear actuator 110 results in the movement of the connector shaft 106 in an anti-clockwise direction when seen from the right hand side of the adjustable footrest assembly 100, which results in movement of the left footrest 104a and the right footrest 102a in the upward direction (UP) of the vehicle 10. Similarly, on receiving the second input, the linear actuator 110 extends from the linear actuator housing of the linear actuator 110. The extension of the linear actuator 110 results in the movement of connector shaft 106 in a clockwise direction when seen from the right hand side of the adjustable footrest assembly 100, which results in movement of the left footrest 104a and the right footrest 102a in the downward direction (DW) of the vehicle 10. In an embodiment, the first input and the second input are received by the linear actuator 110 on operation of a toggle switch 116 by a rider of the vehicle 10. In one non-limiting example, the toggle switch 116 is a DPDT (Double Pole Double Throw) switch with two input terminals 1, 2 and a first set of output terminals 1a, 2a and a second set of output terminals 1b, 2b. The input terminals 1, 2 of the toggle switch 116 are connected to at least one battery 118 of the vehicle 10 and the first set of the output terminals 1a, 2a and the second set of the output terminals 1b, 2b of the toggle switch 116 are connected to the linear actuator 110. The first input on the toggle switch 116 results in the connection of the input terminals 1, 2 with the first set of output terminals 1a, 2a resulting in retraction of the linear actuator 110. Similarly, the second input on the toggle switch 116 results in the connection of input terminals 1, 2 with the second set of output terminals 1b, 2b resulting in extension of the linear actuator 110. The extension of the linear actuator 110 causes movement of the connector shaft 106 in the anti-clockwise direction when seen from the right hand side of the adjustable footrest assembly 100 and movement of the left footrest 104a and the right footrest 102a in the upward direction (Up) of the vehicle 10. The retraction of the linear actuator 110 causes movement of the connector shaft 106 in the clockwise direction when seen from the right hand side of the adjustable footrest assembly 100 and movement of the left footrest 104a and the right footrest 102a in the downward direction (Dw) of the vehicle 10.

The claimed features of the present invention as discussed above are not routine, conventional, or well understood in the art, as the claimed features/steps enable the following solutions to the existing problems in conventional technologies. Specifically, the problem of fixed position of left footrest and the right footrest causing uncomfortable riding experience for different rider anthropometry in different riding conditions is solved by the present invention.

The present invention allows same design of vehicle for different rider anthropometry as riders with different anthropological dimensions can adjust the footrests to suit their requirements. The present invention reduces the long duration riding fatigue by providing optimum riding posture for the given rider and/or pillion rider and riding condition. The optimum riding posture can be achieved by the rider and/or pillion rider by adjusting the footrests. The present invention is simple, reliable and economical. The present invention improves ergonomics and handling of the vehicle. The present invention improves the comfort of the rider and/or pillion rider of the vehicle. The functional aspects of the adjustable footrest assembly increase the market attractiveness of the vehicle to customers.

While the present invention has been described with respect to certain embodiments, it will be apparent to those skilled in the art that various changes and modification may be made without departing from the scope of the invention as defined in the following claims.

### List of Reference Numerals

10- vehicle
12-handlebar assembly
14-front wheel
16-front fork assembly
18-front fender
20-fuel tank
22-rear wheel
24-seat
26-headlamp housing assembly
28-rear fender
30-side covers
100- adjustable footrest assembly
102- right footrest sub-assembly
102a- right footrest
104- left footrest sub-assembly
104a- left footrest
106-connector shaft
106a-left end portion of connector shaft
106b- right end portion of the connector shaft
108- rocker arm
110- linear actuator
112- left guide
114- right guide
116- toggle switch
118-battery
F-Fasteners
B- Brackets

## Claims

1. An adjustable footrest assembly (100) of a vehicle (10), the adjustable footrest assembly (100) comprising:
a right footrest sub-assembly (102) comprising a right footrest (102a);
a left footrest sub-assembly (104) comprising a left footrest (104a); and a footrest adjusting mechanism operably connected to the right footrest sub- assembly (102) and the left footrest sub-assembly (104), wherein the footrest adjusting mechanism being configured to: move the right footrest (102a) and the left footrest (104a) in an upward direction (UP) of the vehicle (10) on receipt of a first input and move the right footrest (102a) and the left footrest (104a) in a downward direction (DW) of the vehicle (10) on receipt of a second input.

2. The adjustable footrest assembly (100) as claimed in claim 1, wherein the footrest adjusting mechanism comprises:
at least one connector shaft (106) assembled on a left main frame of the vehicle (10) and a right main frame of the vehicle (10), the connector shaft (106) comprising: a left end portion (106a) protruding outwardly from the left main frame, and a right end portion (106b) protruding outwardly from the right main frame, the right footrest sub-assembly (102) being assembled on the right end portion (106b) of the connector shaft (106) and the left footrest sub-assembly (104) being assembled on the left end portion (106a) of the connector shaft (106);
at least one linear actuator (110); and at least one rocker arm (108) operably connected to the at least one connector shaft (106) and the at least one linear actuator (110).

3. The adjustable footrest assembly (100) as claimed in claim 2, wherein the linear actuator (110) being configured to retract on receipt of the first input, the retraction of the linear actuator (110) causing movement of the connector shaft (106) in an anti-clockwise direction when seen from the right hand side of the adjustable footrest assembly 100 and movement of the right footrest (102a) and the left footrest (104a) in the upward direction (UP) of the vehicle (10).

4. The adjustable footrest assembly (100) as claimed in claim 3, wherein the linear actuator (110) being configured to extend on receipt of the second input, the extension of the linear actuator (110) causing movement of the connector shaft (106) in a clockwise direction when seen from the right hand side of the adjustable footrest assembly 100 and movement of the right footrest (102a) and the left footrest (104a) in the downward direction (DW) of the vehicle (10).

5. The adjustable footrest assembly (100) as claimed in claim 4, wherein the connector shaft (106) rotates in a pre-defined range (θ), the pre-defined range (θ) being dependent on at least one of: a stroke length of the linear actuator (110), type of the vehicle (10), a length of the rocker arm (108), a distance between the connector shaft (106) and the right footrest (102a), a distance between the connector shaft (106) and the left footrest (104a), an angle between the rocker arm (108) and the linear actuator (110) and an angle between the linear actuator (110) and rear frames of the vehicle (10) on which the linear actuator (110) is mounted.

6. The adjustable footrest assembly (100) as claimed in claim 5, wherein the pre-defined range (θ) of rotation of the connector shaft (106) being zero degree to twenty-five degrees in the clockwise direction when seen from the right hand side of the adjustable footrest assembly 100 and twenty-five degrees to zero degree in the anticlockwise direction when seen from the right hand side of the adjustable footrest assembly 100.

7. The adjustable footrest assembly (100) as claimed in claim 2, wherein the rocker arm (108) is operably connected to a portion of the connector shaft (106) between the left main frame and the right main frame of the vehicle (10).

8. The adjustable footrest assembly (100) as claimed in claim 2, wherein the left main frame comprises a left guide (112) and the right main frame comprises a right guide (114), the connector shaft (106) being received in the left guide (112) and the right guide (114), the left guide (112) and the right guide (114) being adapted to allow free rotation of the connector shaft (106).

9. The adjustable footrest assembly (100) as claimed in claim 2, wherein an extent of retraction, an extent of extension and direction of movement of the linear actuator (110) being controlled by a toggle switch (116), the toggle switch (116) being provided on a handlebar assembly (12) of the vehicle (10) and operable by a rider of the vehicle (10) during running and non-running states of the vehicle (10).

10. The adjustable footrest assembly (100) as claimed in claim 2, wherein an extent of retraction, an extent of extension and direction of movement of the linear actuator being controlled by a toggle switch (116), the toggle switch being provided on a rear portion of the vehicle (10) and operable by a pillion rider of the vehicle (10) during running and non-running states of the vehicle (10).

11. The adjustable footrest assembly (100) as claimed in claim 9 or 10, wherein the toggle switch (116) being a DPDT (Double Pole Double Throw) switch with two input terminals (1,2), a first set of output terminals (1a, 2a), and a second set of output terminals (1b, 2b).

12. The adjustable footrest assembly (100) as claimed in claim 11, wherein the input terminals (1,2) of the toggle switch (116) being connected to at least one battery (118) of the vehicle (10) and the first set of the output terminals (1a, 2a) and the second set of the output terminals (1b, 2b) of the toggle switch (116) being connected to the linear actuator (110), the connection of input terminals (1, 2) with the first set of output terminals (1a, 2a) resulting in retraction of the linear actuator (110) and the connection of input terminals (1, 2) with the second set of output terminals (1b, 2b) resulting in extension of the linear actuator (110).

13. The adjustable footrest assembly (100) as claimed in claim 2, wherein the linear actuator (110) is mounted on rear sub-frames of the vehicle (10), the rear subframes extending rearwardly from a main frame of the vehicle (10).

14. The adjustable footrest assembly (100) as claimed in claim 1, wherein the right footrest sub-assembly (102) comprises a brake mechanism operable by a rider of the vehicle (10) and the left footrest sub-assembly (104) comprises a gear changing mechanism operable by the rider of the vehicle (10).

15. A vehicle (10) comprising at least one adjustable footrest assembly (100) as claimed in claims 1-14.

16. A method (200) for operating at least one adjustable footrest assembly (100) of a vehicle (10), the at least one adjustable footrest assembly (100) comprising a right footrest sub-assembly (102), a left footrest sub-assembly (104) and a footrest adjusting mechanism operably connected to the right footrest assembly (102) and the left footrest assembly (104), the method comprising:
receiving (201), by the footrest adjusting mechanism, a first input;
moving (202), by the footrest adjusting mechanism, a right footrest (102a) of the right footrest sub-assembly (102) and a left footrest (104a) of the left footrest sub-assembly (104) in an upward direction (UP) of the vehicle (10);
receiving (203), by the footrest adjusting mechanism, a second input;
and moving (204), by the footrest adjusting mechanism, the right footrest (102a) of the right footrest sub-assembly (102) and the left footrest (104a) of the left footrest sub-assembly (104) in a downward direction of the vehicle (10).

17. The method (200) as claimed in claim 16, wherein the footrest adjusting mechanism comprises:
at least one connector shaft (106) assembled on a left main frame and a right main frame of the vehicle (10), the connector shaft (106) comprising a left end portion (106a) protruding outwardly from the left main frame and a right end portion (106b) protruding outwardly from the right main frame, the right footrest sub-assembly (102) being assembled on the right end portion (106b) of the connector shaft (106) and the left footrest sub-assembly (104) being assembled on the left end portion(106a) of the connector shaft (106);
at least one linear actuator (110); and
at least one rocker arm operably connected to the connector shaft (106) and the linear actuator (110).

18. The method as claimed in claim 17, wherein the first input and the second input being received on operation of a toggle switch (116) by a rider or a pillion rider of the vehicle (10).

19. The method as claimed in claim 18, wherein the toggle switch (116) being a DPDT (Double Pole Double Throw) switch with two input terminals (1, 2) and a first set of output terminals (1a, 2a) and a second set of output terminals (1b, 2b), the input terminals (1, 2) of the toggle switch (116) being connected to at least one battery (118) of the vehicle (10) and the first set of the output terminals (1a, 2a) and the second set of the output terminals (1b, 2b) of the toggle switch (116) being connected to the linear actuator (110), the first input connects the input terminals (1, 2) with the first set of output terminals (1a, 2a) and the second input connects the input terminals (1, 2) with the second set of output terminals (1b, 2b).

20. The method (200) as claimed in claim 19, wherein, on receipt of the first input, the linear actuator (110) being configured to retract, the retraction of the linear actuator (110) causing movement of the connector shaft (106) in an anti-clockwise direction when seen from the right hand side of the adjustable footrest assembly 100 and movement of the left footrest (104a) and the right footrest (102a) in the upward direction (UP) of the vehicle (10); and wherein, on receipt of the second input, the linear actuator (110) being configured to extend, the extension of the linear actuator (110) causing movement of the connector shaft (106) in a clockwise direction when seen from the right hand side of the adjustable footrest assembly 100 and movement of the left footrest (104a) and the right footrest (102a) in the downward direction (UP) of the vehicle (10).

21. The method (200) as claimed in claim 20, wherein an extent of retraction and an extent of extension of the linear actuator (110) being dependent on time period of operation of the toggle switch (116).
